# FASCICULE DE BREVET EUROPEEN

(11) **EP 1 665 729 B1**
(45) Date de publication et mention de la délivrance du brevet: **11.11.2009**
(21) Numéro de dépôt: 04787424.3
(22) Date de dépôt: 23.09.2004
(51) Int. Cl.: H04L 29/06

(54) **SYSTEME DE TELECOMMUNICATION METTANT EN OEUVRE UNE RESOLUTION DE NOMS DE DOMAINE SECURISEE**
TELEKOMMUNIKATIONSSYSTEM MIT AUFLÖSUNG GESICHERTER DOMÄNENNAMEN
TELECOMMUNICATIONS SYSTEM USING RESOLUTION OF SECURED DOMAIN NAMES

(30) Priorité: 26.09.2003 FR 0311350
(43) Date de publication de la demande: 07.06.2006
(73) Titulaire: FRANCE TELECOM, 75015 Paris (FR)
(72) Inventeur: MIGAULT, Daniel, F-92130 Issy-Les-Moulineaux (FR)
(74) Mandataire: Vidon, Patrice
(86) Numéro de dépôt international: PCT/FR2004/002397
(87) Numéro de publication internationale: WO 2005/032097

(56) Documents cités:
- EP-A- 0 820 176
- US-A1- 2001 011 354
- CHAPMAN D B ET AL: "Building Internet Firewalls" BUILDING INTERNET FIREWALLS, SEBASTOPOL, CA: O'REILLY, US, 1995, pages 278-296,351-375, XP002199932 ISBN: 1-56592-124-0
- EASTLAKE D E: "Domain Name System Security Extensions" INTERNET - DRAFT, [Online] avril 1998 (1998-04), XP002199931 Extrait de l'Internet: URL:ftp://ftp.inet.no/pub/ietf/internet-dr afts/draft-ietf-dnssec-secext2- 05.txt> [extrait le 2002-05-24]

## Description

La présente invention concerne un système de télécommunication incluant une base de données destinée à être reliée à au moins un terminal au moyen d'un réseau de communication, laquelle base de données incluant des données associées à au moins un nom de domaine.

De telles bases de données sont couramment utilisées dans des systèmes de télécommunication mettant en oeuvre un ou plusieurs réseaux maillés publics, systèmes dans lesquels un terminal connaissant un nom de domaine d'un interlocuteur donné interrogera une base de données au moyen de ce nom de domaine pour en obtenir une adresse de protocole courante qui peut être amenée à varier dans le temps, par exemple une adresse IP si un réseau Internet est mis en oeuvre. A cet effet, la base de données tient à jour une table de correspondance entre divers noms de domaines et des adresses de protocole associées à ces noms de domaine. Un tel service de fourniture d'adresses de protocole courantes associées à des noms de domaine connus de terminaux appelants est connu de l'homme du métier sous l'abréviation DNS de l'expression anglaise "Domain Name Service", la base de données étant en principe hébergée au sein d'un serveur couramment appelé serveur DNS et réalisant, en mettant en correspondance un nom de domaine et une adresses de protocole associée à ce nom de domaine, une opération appelée résolution.

Dans certaines applications, des données confidentielles pourront être associées à un nom de domaine figurant dans la base de données hébergée dans le serveur DNS. De telles données confidentielles pourront simplement être constituées par des adresses de protocole particulières qui doivent être tenues secrètes et ne pourront être communiquées qu'à une population restreinte préalablement définie. Les données confidentielles pourront également être constituées par des informations de profil propres au détenteur d'un site identifié par le nom de domaine considéré, ou par des informations techniques propre au site lui-même.

Par exemple, le brevet européen EP 0,820,176 décrit une méthode de filtrage d'information d'un serveur DNS. Cette méthode se caractérise par le fait que la partie privée (adresse IP et nom de domaine) d'une information est supprimée avant que cette infirmation ne soit diffusée aux dispositifs du domaine.

Or, dans l'état actuel de la technique, le serveur DNS, qui fonctionne à la manière d'une mémoire associative adressable au moyen du nom de domaine, n'opère aucun filtrage des informations qu'il restitue en réponse à une requête identifiant un nom de domaine donné, de sorte que le respect du caractère confidentiel de certaines données n'est en aucun cas garanti.

L'un des buts de l'invention est de permettre la réalisation d'un service de fourniture d'adresses de protocole qui assure un respect du caractère confidentiel que pourraient revêtir certaines données mémorisées dans une base de données en correspondance avec un ou plusieurs noms de domaine associés auxdites adresses de protocole.

En effet, un système de télécommunication conforme au paragraphe introductif est caractérisé selon l'invention en ce que la base de données inclut un serveur dit de référence, destiné à contenir des données associées à au moins un nom de domaine, et au moins un premier et un deuxième serveur auxiliaire destinés à contenir des données préalablement enregistrées au sein du serveur de référence et respectivement munies d'un premier et d'un deuxième degré de confidentialité, au moins l'un des premier et deuxième serveurs auxiliaires étant muni de moyens d'identification pour interdire tout accès aux données qu'il contient à des terminaux ne possédant pas d'autorisation d'accès compatible avec le degré de confidentialité attribué aux données contenues dans ce serveur auxiliaire.

L'invention permet d'exercer un contrôle sur les conditions de communication au public des informations contenues dans la base de données, en séparant les données initialement contenues dans le serveur de référence en au moins deux groupes de données présentant des degrés de confidentialité différents, lesquels groupes étant respectivement destinés à être contenus dans des serveurs auxiliaires distincts et accessibles à des populations préalablement définies, qui pourront être spécifiques à chaque serveur auxiliaire et différentes d'un serveur auxiliaire à l'autre.

La base de données sera avantageusement munie de moyens de duplication des données contenues dans le serveur de référence vers les premier et deuxième serveurs auxiliaires en fonction des degrés de confidentialité attribués auxdites données.

La duplication vers les serveurs auxiliaires des informations contenues dans le serveur de référence permettra une consultation de ces informations au niveau des serveurs auxiliaires, en autorisant la conservation d'une version de sauvegarde de ces informations au sein du serveur de référence.

Les premier et deuxième serveurs auxiliaires seront avantageusement munis de moyens d'identification pour interdire tout accès aux données contenues dans les premier et deuxième serveurs auxiliaires à des terminaux ne possédant pas d'autorisations d'accès respectivement compatibles avec les premier et deuxième degrés de confidentialité.

Les moyens d'identification constituent un moyen simple de restriction d'accès aux informations contenues dans un serveur donné, puisqu'ils imposent à chaque terminal ayant requis l'accès de faire la preuve de son droit d'accès, et dispensent ainsi le serveur de toute recherche d'informations supplémentaires en vue d'établir l'existence ou l'inexistence de ce droit.

D'autres moyens de restriction d'accès, tels des moyens de localisation du terminal ayant émis une requête d'accès, pourront bien sûr être utilisés pour interdire un accès à des données à des terminaux ne possédant pas d'autorisation d'accès compatible avec le degré de confidentialité attribué auxdites données, la compatibilité étant de nature géographique dans cet autre exemple.

Le serveur de référence pourra être inaccessible, en lecture comme en écriture, à tous les terminaux extérieurs, hormis à certains équipements de contrôle appartenant à un gestionnaire du système qui doit être capable de modifier, de supprimer ou d'ajouter de manière dynamique des adresses de protocole, ainsi éventuellement que des données confidentielles liées à des noms de domaine inclus dans la base de données. Une telle inaccessibilité garantit une certaine intégrité des données contenues dans le serveur de référence, que ces données soient ou non confidentielles.

Afin de conférer à la base de données conforme à l'invention un degré de liberté supplémentaire pour son fonctionnement, on pourra cependant autoriser un accès en lecture seulement aux données contenues dans le serveur de référence. A cet effet, le serveur de référence sera muni de moyens d'identification pour interdire toute lecture des données contenues dans ledit serveur de référence depuis des terminaux ne possédant pas d'autorisation d'accès compatible avec un troisième degré de confidentialité.

Pour préserver au maximum l'intégrité des données contenues dans le serveur de référence auxquelles un accès en lecture est ainsi rendu possible, le troisième degré de confidentialité aura un effet restrictif supérieur aux effets restrictifs produits par les premier et deuxième degrés de confidentialité.

La population apte à lire directement les informations contenues dans le serveur de référence sera ainsi moins nombreuse que les populations autorisées à consulter les serveurs auxiliaires.

Dans un même souci de préservation de l'intégrité des données qu'il est destiné à contenir, le serveur de référence sera de préférence muni de moyens d'identification pour interdire toute écriture de données dans ledit serveur de référence depuis un terminal ne possédant pas d'autorisation d'accès compatible avec un degré de confidentialité supérieur ayant un effet restrictif supérieur aux effets restrictifs produits par tous les autres degrés de confidentialité attribués aux données contenues dans le serveur de référence et dans les serveurs auxiliaires.

L'invention concerne également, en tant que moyen essentiel à sa mise en oeuvre, un dispositif de mémorisation d'informations incluant un serveur dit de référence, et au moins un premier et un deuxième serveur auxiliaire destinés à contenir des données préalablement enregistrées au sein du serveur de référence et respectivement munies d'un premier et d'un deuxième degré de confidentialité, au moins l'un des premier et deuxième serveurs auxiliaires étant muni de moyens d'identification pour interdire tout accès aux données qu'ils contient à des requérants ne possédant pas d'autorisation d'accès compatible avec le degré de confidentialité attribué aux données contenues dans ce serveur auxiliaire.

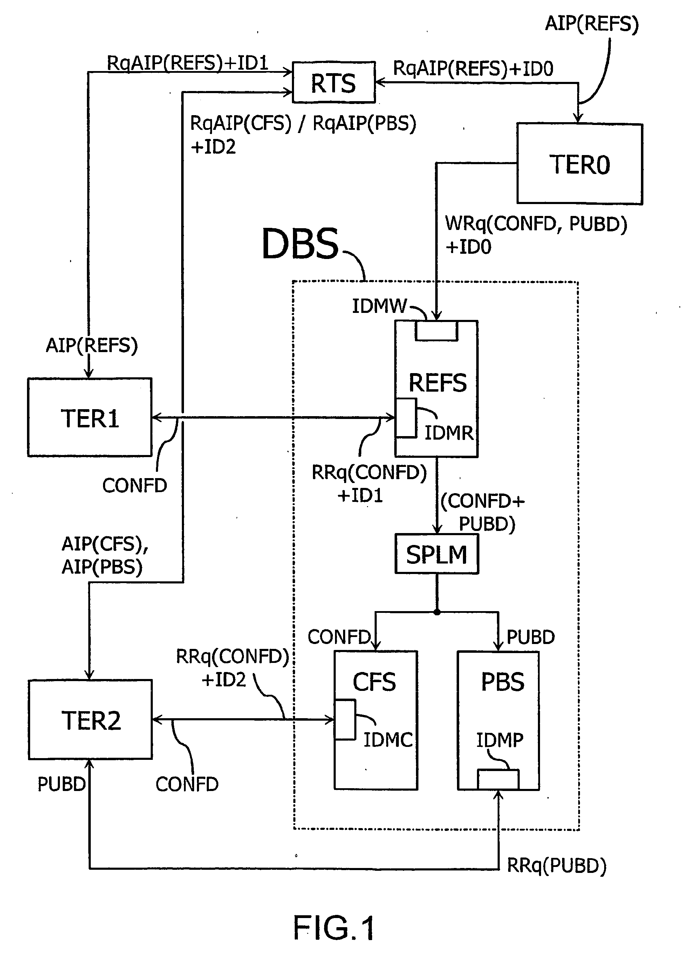

Les caractéristiques de l'invention mentionnées ci-dessus, ainsi que d'autres, apparaîtront plus clairement à la lecture de la description suivante d'un exemple de réalisation, ladite description étant faite en relation avec la Fig.1 qui est un schéma fonctionnel représentant, sous une forme simplifiée, un système de télécommunication dans lequel l'invention est mise en oeuvre.

Ce système de télécommunication inclut une base de données DBS destinée à être reliée à au moins un terminal TER0, TER1 ou TER2 au moyen d'un réseau de communication, par exemple un réseau maillé de type Internet. Dans ce mode de réalisation particulier de l'invention, la base de données DBS inclut un serveur de référence REFS destiné à contenir des données associées à au moins un nom de domaine, et un premier et un deuxième serveur auxiliaire CFS et PBS destinés à contenir des données préalablement enregistrées au sein du serveur de référence et respectivement munies d'un premier et d'un deuxième degré de confidentialité.

A cet effet, chacun des premier et deuxième serveurs auxiliaires CFS et PBS est muni de moyens d'identification, respectivement IDMC et IDMP, pour interdire tout accès aux données qu'il contient à des terminaux ne possédant pas d'autorisation d'accès compatible avec le degré de confidentialité attribué aux données CONFD ou PUBD contenues dans ce serveur auxiliaire CFS ou PBS.

Les premier et deuxième degrés de confidentialité seront en principe choisis de telle sorte qu'ils définiront deux populations différentes, la population autorisée à accéder aux données confidentielles CONFD contenues dans le premier serveur auxiliaire CFS étant de par ce choix de taille très inférieure à la population autorisée à accéder aux données publiques PUBD contenues dans le deuxième serveur auxiliaire PBS.

Dans un cas simplifié d'un tel mode de mise en oeuvre de l'invention, seules les données CONFD contenues dans le premier serveur auxiliaire CFS seront des données confidentielles, par opposition aux données PUBD contenues dans le deuxième serveur auxiliaire PBS qui seront des données publiques. Dans un tel cas simplifié, les moyens d'identification IDMP mentionnés ci-dessus pourront être inexistants ou simplement aptes à contrôler un respect de conditions de forme auxquelles seraient assujetties des requêtes en lecture RRq(PUBD) des données publiques PUBD contenues dans le deuxième serveur auxiliaire PBS.

Lorsqu'un terminal TER2 souhaitera consulter des données contenues dans le premier serveur auxiliaire CFS, ledit terminal enverra tout d'abord une requête RqAIP(CFS) à un serveur racine RTS aux fins de se voir communiquer l'adresse de protocole AIP(CFS) de ce premier serveur auxiliaire CFS. Cette requête RqAIP(CFS) sera usuellement accompagnée d'un identifiant ID2 de ce terminal TER2. Le terminal TER2 pourra ensuite émettre à destination de cette adresse de protocole AIP(CFS) une requête de lecture RRq(CONFD) d'informations CONFD identifiées par le nom de domaine qui leur est associé et qui est connu du terminal TER2. Cette requête RRq(CONFD) sera accompagnée de l'identifiant ID2 et parviendra au premier serveur auxiliaire CFS *via* les moyens d'identification IDMC dont il est muni. Si l'identifiant ID2 identifie le terminal TER2 comme appartenant à la population autorisée à accéder aux données CONFD munies du premier degré de confidentialité et considérées comme confidentielles dans cet exemple, les données CONFD requises seront transmises en retour au terminal TER2. Dans le cas contraire, les moyens d'identification IDMC pourront émettre vers le terminal TER2 un avis d'irrecevabilité, ou simplement mettre fin à la connexion entre le terminal TER2 et le premier serveur auxiliaire CFS. Les requêtes et messages décrits précédemment transiteront avantageusement *via* le réseau Internet, auquel cas les adresses de protocole seront des adresses IP.

Lorsque le terminal TER2 souhaitera consulter des données contenues dans le deuxième serveur auxiliaire PBS, ledit terminal enverra tout d'abord une requête RqAIP(PBS), accompagnée de l'identifiant ID2, au serveur racine RTS aux fins de se voir communiquer l'adresse de protocole AIP(PBS) de ce deuxième serveur auxiliaire PBS. Le terminal TER2 pourra ensuite émettre à destination de cette adresse de protocole AIP(PBS) une requête de lecture RRq(PUBD) d'informations PUBD identifiées par le nom de domaine qui leur est associé et qui est connu du terminal TER2. Cette requête RRq(PUBD) parviendra au deuxième serveur auxiliaire PBS *via* les moyens d'identification IDMP dont il est muni. Les données contenues dans le deuxième serveur auxiliaire PBS étant publiques dans le cas simplifié décrit ici, l'identifiant ID2 du terminal T2 n'est pas nécessaire pour obtenir un accès à ces données PUBD, qui seront automatiquement transmises en retour au terminal TER2, à moins que la requête de lecture RRq(PUBD) ne présente un vice de forme qui sera détecté par les moyens d'identification IDMP. Tout terminal formulant une requête de lecture de données PUBD contenues dans le deuxième serveur auxiliaire PBS est ainsi présumé posséder une autorisation d'accès compatible avec le degré de confidentialité très faible qui est attribué dans cet exemple auxdites données PUBD.

Chacun des premier et deuxième serveurs auxiliaires CFS et PBS pourra être construit selon une architecture maître-esclave bien connue de l'homme du métier, et inclure ainsi un ou plusieurs serveurs esclaves non-représentés ici et agencés en parallèle sous la dépendance d'un unique serveur maître qui jouira d'une compétence exclusive pour exécuter une requête en écriture dans l'un des serveurs esclaves qu'il contrôle.

Dans le mode de mise en oeuvre particulier de l'invention décrit ici, la base de données DBS est munie de moyens de duplication SPLM des données CONFD, PUBD contenues dans le serveur de référence REFS vers les premier et deuxième serveurs auxiliaires CFS et PBS en fonction des degrés de confidentialité attribués auxdites données.

La duplication vers les serveurs auxiliaires CFS et PBS des données CONFD, PUBD contenues dans le serveur de référence REFS permettra une consultation de ces données CONFD, PUBD au niveau des serveurs auxiliaires CFS et PBS, en autorisant la conservation d'une version de sauvegarde de ces données au sein du serveur de référence REFS.

Pour exécuter une telle répartition des copies des données CONFD, PUBD, les moyens de duplication SPLM pourront mettre en oeuvre une fonction de répartition destinée à analyser un champ de répartition associé à chaque donnée et destiné à contenir une valeur représentative du degré de confidentialité attribué à ladite donnée. Ainsi, dans le cas simplifié décrit ci-dessus où les données sont considérées soit comme publiques, soit comme confidentielles, le champ de répartition pourra par exemple ne contenir qu'un seul bit égal à "0" s'il est associé à une donnée publique PUBD ou à "1" dans le cas d'une donnée confidentielle CONFD.

Dans le mode de réalisation particulier de l'invention décrit ici, un accès supplémentaire, mais uniquement en lecture, aux données contenues dans le serveur de référence REFS a été prévu afin de conférer à la base de données DBS un degré de liberté supplémentaire pour son fonctionnement. A cet effet, le serveur de référence REFS est muni de moyens d'identification IDMR pour interdire toute lecture des données contenues dans ledit serveur de référence REFS depuis des terminaux ne possédant pas d'autorisation d'accès compatible avec un troisième degré de confidentialité.

Pour préserver au maximum l'intégrité des données contenues dans le serveur de référence REFS auxquelles un accès en lecture est ainsi rendu possible, le troisième degré de confidentialité aura un effet restrictif supérieur aux effets restrictifs produits par les premier et deuxième degrés de confidentialité. La population apte à lire directement les informations contenues dans le serveur de référence REFS sera ainsi moins nombreuse que les populations autorisées à consulter les serveurs auxiliaires CFS et PBS.

Lorsqu'un terminal TER1 souhaitera consulter des données contenues dans le serveur de référence REFS, ledit terminal TER1 enverra tout d'abord une requête de lecture RqAIP(REFS) au serveur racine RTS aux fins de se voir communiquer l'adresse de protocole AIP(REFS) de ce serveur de référence REFS. Cette requête de lecture RqAIP(REFS) sera usuellement accompagnée de l'identifiant ID1 de ce terminal TER1. Le terminal TER1 pourra ensuite émettre à destination de cette adresse de protocole AIP(REFS) une requête de lecture RRq(CONFD) d'informations CONFD identifiées par le nom de domaine qui leur est associé et qui est connu du terminal TER1. Cette requête RRq(CONFD) sera accompagnée de l'identifiant ID1 et parviendra au serveur de référence REFS *via* des moyens d'identification IDMR dont il est muni. Si l'identifiant ID1 identifie le terminal TER1 comme appartenant à la population munie du troisième degré de confidentialité, les données CONFD requises seront transmises en retour au terminal TER1. Dans le cas contraire, les moyens d'identification IDMR pourront émettre vers le terminal TER1 un avis d'irrecevabilité, ou simplement mettre fin à la connexion entre le terminal TER1 et le serveur de référence REFS.

La procédure décrite ci-dessus est également applicable à la lecture directe de données publiques contenues dans le serveur de référence REFS.

Dans un souci constant de préservation de l'intégrité des données qu'il est destiné à contenir, le serveur de référence REFS est ici muni de moyens d'identification IDMW pour interdire toute écriture de données dans ledit serveur de référence REFS depuis un terminal TER0 ne possédant pas d'autorisation d'accès compatible avec un degré de confidentialité ayant un effet restrictif supérieur aux effets restrictifs produits par tous les autres degrés de confidentialité attribués aux données contenues dans le serveur de référence et dans les serveurs auxiliaires.

La population apte à écrire ou à modifier des données dans le serveur de référence REFS sera ainsi encore moins nombreuse que les populations exclusivement autorisées à lire directement des informations contenues dans le serveur de référence REFS, et, *a fortiori*, bien moins nombreuse que les populations autorisées à consulter les serveurs auxiliaires CFS et PBS.

Lorsqu'un terminal TER0 souhaitera écrire des données dans le serveur de référence REFS ou modifier des données contenues dans le serveur de référence REFS, ledit terminal TER0 enverra tout d'abord une requête RqAIP(REFS) au serveur racine RTS aux fins de se voir communiquer l'adresse de protocole AIP(REFS) de ce serveur de référence REFS. Cette requête RqAIP(REFS) sera usuellement accompagnée de l'identifiant ID0 de ce terminal TER0. Le terminal TER0 pourra ensuite émettre à destination de cette adresse de protocole AIP(REFS) une requête d'écriture WRq(CONFD, PUBD) d'informations confidentielles ou publiques destinées à être identifiées par un nom de domaine qui leur est associé, laquelle requête d'écriture WRq(CONFD, PUBD) sera accompagnée de l'identifiant ID0 et parviendra au serveur de référence REFS *via* des moyens d'identification supplémentaires IDMW dont il est muni. Si l'identifiant ID0 identifie le terminal TER0 comme appartenant à la population très restreinte autorisée à écrire des données dans le serveur de référence REFS, les données CONFD, PUBD seront inscrites à une adresse spécifiée dans la requête d'écriture WRq(CONFD, PUBD), qui sera représentative du nom de domaine associé aux données CONFD, PUBD. Dans le cas contraire, les moyens d'identification IDMR pourront émettre vers le terminal TER0 un avis d'irrecevabilité, ou simplement mettre fin à la connexion entre le terminal TER0 et le serveur de référence REFS.

L'invention décrite ci-dessus permet donc la réalisation d'un service de fourniture d'adresses de protocole qui assure un respect du caractère confidentiel que pourraient revêtir certaines données CONFD mémorisées dans la base de données DBS en correspondance avec un ou plusieurs noms de domaine associés auxdites adresses de protocole.

## Revendications

1. Système de télécommunication incluant une base de données (DBS) incluant des données associées à au moins un nom de domaine et destinée à être reliée à au moins un terminal (TERO, TER1, TER2) au moyen d'un réseau de communication, **caractérisé en ce que** ladite base de données (DBS) inclue un serveur dit de référence (REFS), destiné à contenir lesdites données associées à au moins un nom de domaine, et au moins un premier et un deuxième serveur auxiliaire (CFS, PBS) destinés à contenir des données préalablement enregistrées au sein du serveur de référence (REFS) et respectivement munies d'un premier et d'un deuxième degré de confidentialité, au moins l'un des premier et deuxième serveurs auxiliaires (CFS, PBS) étant muni de moyens d'identification (IDMC, IDMP) pour interdire tout accès aux données qu'il contient à des terminaux ne possédant pas d'autorisation d'accès compatible avec le degré de confidentialité attribué aux données contenues dans ce serveur auxiliaire.

2. Système de télécommunication selon la revendication 1, **caractérisé en ce que** la base de données est munie de moyens de duplication (SPLM) des données contenues dans le serveur de référence (REFS) vers les premier et deuxième serveurs auxiliaires (CFS, PBS) en fonction des degrés de confidentialité attribués auxdites données.

3. Système de télécommunication selon l'une des revendications 1 ou 2, **caractérisé en ce que** les premier et deuxième serveurs auxiliaires (CFS, PBS) sont munis de moyens d'identification (IDMC, IDMP) pour interdire tout accès aux données contenues dans les premier et deuxième serveurs auxiliaires (CFS, PBS) à des terminaux ne possédant pas d'autorisations d'accès respectivement compatibles avec les premier et deuxième degrés de confidentialité.

4. Système de télécommunication selon l'une des revendications 1 à 3, **caractérisé en ce que** le serveur de référence (REFS) est muni de moyens d'identification (IDMR) pour interdire toute lecture des données contenues dans ledit serveur de référence (REFS) depuis des terminaux ne possédant pas d'autorisation d'accès compatible avec un troisième degré de confidentialité.

5. Système de télécommunication selon la revendication 4, **caractérisé en ce que** le troisième degré de confidentialité a un effet restrictif supérieur aux effets restrictifs produits par les premier et deuxième degrés de confidentialité.

6. Système de télécommunication selon l'une des revendications 1 à 5, **caractérisé en ce que** le serveur de référence (REFS) est muni de moyens d'identification (IDMW) pour interdire toute écriture de données dans ledit serveur de référence (REFS) depuis un terminal ne possédant pas d'autorisation d'accès compatible avec un degré de confidentialité supérieur ayant un effet restrictif supérieur aux effets restrictifs produits par tous les autres degrés de confidentialité attribués aux données contenues dans le serveur de référence (REFS) et dans les serveurs auxiliaires.

7. Dispositif de mémorisation d'informations incluant un serveur dit de référence (REFS), destiné à contenir des données associées à au moins un nom de domaine, et au moins un premier et un deuxième serveur auxiliaire (CFS, PBS) destinés à contenir des données préalablement enregistrées au sein du serveur de référence et respectivement munies d'un premier et d'un deuxième degré de confidentialité, au moins l'un des premier et deuxième serveurs auxiliaires (CFS, PBS) étant muni de moyens d'identification (IDMC, IDMP) pour interdire tout accès aux données qu'il contient à des requérants ne possédant pas d'autorisation d'accès compatible avec le degré de confidentialité attribué aux données contenues dans ce serveur auxiliaire.

## Claims

1. Telecommunication system including a database (DBS) including data associated with at least one domain name and intended to be linked to at least one terminal (TERO, TER1, TER2) by means of a communication network, **characterized in that** said database (DBS) includes a so-called reference server (REFS), intended to contain said data associated with at least one domain name, and at least one first and one second auxiliary server (CFS, PBS) intended to contain data previously stored in the reference server (REFS) and respectively provided with a first and a second degree of confidentiality, at least one of the first and second auxiliary servers (CFS, PBS) being provided with identification means (IDMC, IDMP) to prevent any access to the data that it contains to terminals that do not have access permission compatible with the degree of confidentiality assigned to the data contained **in that** auxiliary server.

2. Telecommunication system according to Claim 1, **characterized in that** the database is provided with means (SPLM) of duplicating the data contained in the reference server (REFS) to the first and second auxiliary servers (CFS, PBS) according to the degrees of confidentiality assigned to said data.

3. Telecommunication system according to one of Claims 1 or 2, **characterized in that** the first and second auxiliary servers (CFS, PBS) are provided with identification means (IDMC, IDMP) to prevent any access to the data contained in the first and second auxiliary servers (CFS, PBS) to terminals that do not have access permissions that are respectively compatible with the first and second degrees of confidentiality.

4. Telecommunication system according to one of Claims 1 to 3, **characterized in that** the reference server (REFS) is provided with identification means (IDMR) to prevent any reading of the data contained in said reference server (REFS) from terminals that do not have access permission compatible with a third degree of confidentiality.

5. Telecommunication system according to Claim 4, **characterized in that** the third degree of confidentiality has a restrictive effect greater than the restrictive effects produced by the first and second degrees of confidentiality.

6. Telecommunication system according to one of Claims 1 to 5, **characterized in that** the reference server (REFS) is provided with identification means (IDMW) to prevent any writing of data in said reference server (REFS) from a terminal that does not have access permission compatible with a higher degree of confidentiality having a restrictive effect greater than the restrictive effects produced by all the other degrees of confidentiality assigned to the data contained in the reference server (REFS) and in the auxiliary servers.

7. Information storage device including a so-called reference server (REFS), intended to contain data associated with at least one domain name, and at least one first and one second auxiliary server (CFS, PBS) intended to contain data previously stored in the reference server and respectively provided with a first and a second degree of confidentiality, at least one of the first and second auxiliary servers (CFS, PBS) being provided with identification means (IDMC, IDMP) to prevent any access to the data that it contains to requesters that do not have access permission compatible with the degree of confidentiality assigned to the data contained in this auxiliary server.

## Patentansprüche

1. Telekommunikationssystem, das eine Datenbank (DBS) enthält, die mindestens einem Domain-Namen zugeordnete Daten enthält und dazu bestimmt ist, mittels eines Kommunikationsnetzes mit mindestens einem Endgerät (TERO, TER1, TER2) verbunden zu werden, **dadurch gekennzeichnet, dass** die Datenbank (DBS) einen so genannten Bezugsserver (REFS), der dazu bestimmt ist, die mindestens einem Domain-Namen zugeordneten Daten zu enthalten, und mindestens einen ersten und einen zweiten Hilfsserver (CFS, PBS) enthält, die dazu bestimmt sind, vorher im Bezugsserver (REFS) gespeicherte und mit einem ersten bzw. mit einem zweiten Vertraulichkeitsgrad versehene Daten zu enthalten, wobei mindestens einer der ersten und zweiten Hilfsserver (CFS, PBS) mit Identifizierungseinrichtungen (IDMC, IDMP) versehen ist, um jeden Zugriff auf die in ihm enthaltenen Daten durch Endgeräte zu verhindern, die keine mit dem den in diesem Hilfsserver enthaltenen Daten zugewiesenen Vertraulichkeitsgrad kompatible Zugriffsberechtigung besitzen.

2. Telekommunikationssystem nach Anspruch 1, **dadurch gekennzeichnet, dass** die Datenbank mit Vervielfältigungseinrichtungen (SPLM) der im Bezugsserver (REFS) enthaltenen Daten zum ersten und zum zweiten Hilfsserver (CFS, PBS) in Abhängigkeit von den den Daten zugewiesenen Vertraulichkeitsgraden versehen ist.

3. Telekommunikationssystem nach einem der Ansprüche 1 oder 2, **dadurch gekennzeichnet, dass** der erste und der zweite Hilfsserver (CFS, PBS) mit Identifizierungseinrichtungen (IDMC, IDMP) versehen sind, um jeden Zugriff zu den im ersten und im zweiten Hilfsserver (CFS, PBS) enthaltenen Daten für Endgeräte zu verhindern, die keine mit dem ersten bzw. dem zweiten Vertraulichkeitsgrad kompatiblen Zugriffsberechtigungen besitzen.

4. Telekommunikationssystem nach einem der Ansprüche 1 bis 3, **dadurch gekennzeichnet, dass** der Bezugsserver (REFS) mit Identifizierungseinrichtungen (IDMR) versehen ist, um jedes Lesen der im Bezugsserver (REFS) enthaltenen Daten ausgehend von Endgeräten zu verhindern, die keine mit einem dritten Vertraulichkeitsgrad kompatible Zugriffsberechtigung besitzen.

5. Telekommunikationssystem nach Anspruch 4, **dadurch gekennzeichnet, dass** der dritte Vertraulichkeitsgrad eine restriktive Wirkung hat, die höher ist als die restriktiven Wirkungen, die vom ersten und vom zweiten Vertraulichkeitsgrad erzeugt werden.

6. Telekommunikationssystem nach einem der Ansprüche 1 bis 5, **dadurch gekennzeichnet, dass** der Bezugsserver (REFS) mit Identifizierungseinrichtungen (IDMW) versehen ist, um jedes Schreiben von Daten in den Bezugsserver (REFS) ausgehend von einem Endgerät zu verhindern, das keine Zugriffsberechtigung besitzt, die mit einem höheren Vertraulichkeitsgrad kompatibel ist, der eine höhere restriktive Wirkung als die restriktiven Wirkungen hat, die von allen anderen Vertraulichkeitsgraden erzeugt werden, die den im Bezugsserver (REFS) und in den Hilfsservern enthaltenen Daten zugewiesen sind.

7. Vorrichtung zum Speichern von Informationen, die einen so genannten Bezugsserver (REFS), der dazu bestimmt ist, mindestens einem Domain-Name zugeordnete Daten zu enthalten, und mindestens einen ersten und einen zweiten Hilfsserver (CFS, PBS) enthält, die dazu bestimmt sind, Daten zu enthalten, die vorher in dem Bezugsserver gespeichert wurden und mit einem ersten bzw. einem zweiten Vertraulichkeitsgrad versehen sind, wobei mindestens einer der ersten und zweiten Hilfsserver (CFS, PBS) mit Identifizierungseinrichtungen (IDMC, IDMP) versehen ist, um jeden Zugriff auf die in ihm enthaltenen Daten für Antragsteller zu verhindern, die keine Zugriffsberechtigung besitzen, die mit dem den in diesem Hilfsserver enthaltenen Daten zugewiesenen Vertraulichkeitsgrad kompatibel ist.
